# EUROPÄISCHE PATENTANMELDUNG

(11) **EP 4 711 052 A1**
(43) Veröffentlichungstag der Anmeldung: **18.03.2026**
(21) Anmeldenummer: 25201110.1
(22) Anmeldetag: 09.09.2025
(51) Int. Cl.: B08B 7/00, B23K 26/03, B23K 26/16, B23K 26/352, G01N 21/64, B23K 26/36

(54) **VERFAHREN UND VORRICHTUNG ZUR THERMISCHEN DEKONTAMINATION**

(30) Priorität: 12.09.2024 DE 102024126199
(71) Anmelder: Dornier Hinneburg GmbH, 01097 Dresden (DE)
(72) Erfinder: ANTHOFER, Anton Philipp, 01097 Dresden (DE)
(74) Vertreter: Gottfried, Hans-Peter

(57) **Zusammenfassung**

Verfahren und Vorrichtung zur Dekontamination eines Bauteils, wobei eine Erwärmung einer Oberfläche auf eine Reaktionstemperatur zwischen 1000 °C und 1500 °C durch einen Laserstrahl erfolgt, umfassend die Schritte a. thermische Zersetzung einer auf der Oberfläche des Bauteils anhaftenden Beschichtung, die durch den Kontaminanten gebildet wird; b. Überwachung der Zersetzung durch Analyse der gasförmigen Zersetzungsprodukte über der Oberfläche; c. Verhinderung der Rekombination der Zersetzungsprodukte zum Kontaminanten durch Kühlung der Zersetzungsprodukte; d. Absaugen der Zersetzungsprodukte zusammen mit Partikeln des Kontaminanten und Immobilisierung in einem Filter. Nach der Erfindung sind die weiteren Schritte e. Abscheiden abgesprengter Partikel; f. fortgesetzte Erwärmung der vom Kontaminanten befreiten Oberfläche des Bauteils; g. Herausdrängen des Kontaminanten aus einer oberflächennahen Struktur des Bauteils, indem die Struktur so weit erwärmt wird, dass eingeschlossene Gase sowie Kristallwasser bei ihrer Ausdehnung den Kontaminanten zur Oberfläche führen, er dort durch die Reaktionstemperatur zersetzt und die Zersetzungsprodukte im gasförmigen Zustand aus dieser hinaus drängen.

## Beschreibung

Die Erfindung betrifft ein Verfahren zur Dekontamination eines Bauteils, wobei eine Erwärmung einer Oberfläche des Bauteils durch einen Laserstrahl erfolgt. Eine auf der Bauteiloberfläche des Bauteils anhaftende Beschichtung, gebildet durch den Kontaminanten, wird thermisch zersetzt. Eine Überwachung der Zersetzung des Kontaminanten durch Analyse der gasförmigen Zersetzungsprodukte im Bereich über der Oberfläche erfolgt mittels einer Analyseanordnung. Eine Verhinderung der Rekombination der Zersetzungsprodukte zum Kontaminanten wird durch Kühlung der Zersetzungsprodukte mittels einer Kühlungsanordnung erreicht, wobei ein Absaugen der Zersetzungsprodukte zusammen mit Partikeln des Kontaminanten und eine Immobilisierung in einer Filteranordnung erfolgen. Die Erfindung betrifft auch eine Vorrichtung zur Ausführung des Verfahrens.

Ein solches Verfahren und die dafür erforderliche Vorrichtung sind aus dem Dokument DE 10 2014 214 427 A1 bekannt. Das Dokument beschreibt ein Verfahren und eine Vorrichtung zur Entfernung von Beschichtungen, die polychlorierte Biphenyle (PCB) enthalten, von einer Oberfläche eines Basiswerkstoffs. Ziel des Verfahrens ist es, PCB effizient und sicher zu entfernen, während der Prozess in Echtzeit überwacht wird. Zunächst wird die PCB-haltige Beschichtung mit einem ersten Laserstrahl auf eine vorbestimmte Temperatur erhitzt, sodass die PCB thermisch zersetzt werden. Ein zweiter Laserstrahl wird auf eine Zone oberhalb der erhitzten Beschichtung gerichtet, um die Zersetzung der PCB zu überwachen. Dabei wird eine chemische Verbindung, die bei der Zersetzung entsteht, zur Fluoreszenz angeregt und mit einem optischen Detektor erfasst, was eine kontinuierliche Überwachung des Prozesses ermöglicht.

Die Laserleistung wird basierend auf der Konzentration der detektierten Zersetzungsprodukte angepasst. Wenn die Konzentration unter einen festgelegten Wert fällt, wird die Laserleistung erhöht, um sicherzustellen, dass die PCB vollständig zersetzt werden. Ein Absaugsystem nimmt die bei der Zersetzung entstehenden gasförmigen oder partikelgebundenen Substanzen auf, um eine Rekontamination zu verhindern.

Die Vorrichtung umfasst ein Lasersystem, das aus einem ersten Laser zum thermischen Abtragen der Beschichtung und einem zweiten Laser zur Überwachung durch Fluoreszenz besteht. Der erste Laser arbeitet im Wellenlängenbereich von 800 nm bis 1100 nm mit einer Leistung von mindestens 10 kW, während der zweite Laser im Bereich von 271 nm bis 279 nm operiert. Ein optisches Detektionssystem überwacht die Fluoreszenz, um den Fortschritt der PCB-Zersetzung zu kontrollieren. Zudem enthält die Vorrichtung ein Absaugsystem mit einer Filteranordnung, das die beim Zersetzungsprozess entstehenden toxischen Substanzen sicher entfernt. Insgesamt bietet das Verfahren eine präzise und sichere Methode zur Entfernung von PCB-haltigen Beschichtungen, insbesondere bei Sanierungs- und Abbrucharbeiten, und minimiert dabei die Gefahr einer Kontaminationsverschleppung.

Damit wird gewährleistet, dass eine Beschichtung durch einen Kontaminanten entfernt und schadlos beseitigt werden kann. Der quantitativ größte Teil des Kontaminanten lässt sich auf diese Weise beseitigen. Allerdings diffundiert der Kontaminant auch in den Untergrund, wo er sich in zwar geringerer Konzentration anreichert, jedoch ist hierdurch eine deutlich größere Menge Material von der Kontamination betroffen.

Es ist daher Aufgabe der Erfindung, ein Verfahren anzubieten, mit dem nicht nur eine Oberfläche von einer kontaminierenden Beschichtung befreit werden kann, sondern auch das Basis- oder Trägermaterial der Beschichtung, das ebenfalls in den an die Beschichtung angrenzenden Bereichen kontaminiert ist.

Die Erfindung wird gelöst durch ein Verfahren zur Dekontamination eines Bauteils, wobei eine Erwärmung einer Oberfläche des Bauteils durch einen Laserstrahl erfolgt. Die Erwärmung erfolgt vorzugsweise lokal. Der bevorzugt eingesetzte, effiziente Laser hat nur eine Leistung von 3 kW, alternativ jedoch auch bis 10 kW oder darüber hinaus. Durch die Erwärmung der Beschichtung auf eine vorbestimmte Temperatur wird die Beschichtung, typischerweise ein Lack, von der Oberfläche des Basiswerkstoffs abgelöst und verbrannt, d. h. die ursprüngliche chemische Verbindung zersetzt. Die Verwendung von Laserstrahlung zur Dekontamination weist den Vorteil auf, lokal sehr schnell sehr hohe Temperaturen erzeugen zu können.

Das Verfahren umfasst die folgenden, gleichzeitig ablaufenden Schritte:
a. Thermische Zersetzung der Beschichtung einer auf der Bauteiloberfläche des Bauteils anhaftenden Beschichtung, die durch den Kontaminanten gebildet wird. Wenn es sich um ein Betonbauteil handelt, ist das Material Beton und die Bauteiloberfläche eine Betonoberfläche, auf der die Beschichtung haftet. Durch den Laserstrahl wird die Beschichtung auf eine vorbestimmte Temperatur erwärmt, sodass der Kontaminant, insbesondere polychlorierte Biphenyle, thermisch zersetzt werden.
b. Die Überwachung der Zersetzung des Kontaminanten erfolgt durch Analyse der gasförmigen Zersetzungsprodukte im Bereich über der Oberfläche, vorzugsweise in einem im Wesentlichen abgeschlossenen Raum, aus dem die gasförmigen Zersetzungsprodukte abgesaugt werden und dessen Grundfläche über der Oberflächen den aktuell bearbeiteten Bereich der Oberfläche bestimmt.

Die thermische Zersetzung, deren Erfolg bzw. den Grad der Zersetzung, wird durch wenigstens eine Analyseanordnung sowie offline Beprobung, also vor und nach dem Behandeln der Oberfläche, ermittelt. Dies erfolgt beispielsweise durch Kratzproben. Die Analyseanordnung ist im Partikelabscheider, in den Filtern und in der Umgebungsluft, zur Beprobung der Abluft, angeordnet. So kann der Zersetzungserfolg nachträglich sicher und durch robuste Technik geprüft werden.

Durch die thermische Zersetzung bildet sich eine Reaktionszone, die sich oberhalb des zuvor bestrahlten Bereichs befindet und dort durch den zweiten Strahl einfach hinsichtlich der Zusammensetzung untersucht werden kann. Das Verwenden der laserinduzierten Fluoreszenz ermöglicht eine schnelle und präzise Echtzeituntersuchung der Reaktionszone. Der zweite Laser regt üblicherweise bei der thermischen Zersetzung von PCB-haltigen Beschichtungen entstehende chemische Zwischenverbindungen zur Fluoreszenz an, sodass gezielt diese Komponenten untersucht werden können.

c. Verhinderung der Rekombination der Zersetzungsprodukte zum Kontaminanten durch Kühlung der Zersetzungsprodukte, wobei das Kühlen auch als thermisches Quenchen bezeichnet wird. Wird PCB zersetzt, dann sind die Produkte PCDD/PCDF, also oxidierte PCB. Danach kann es zur Rekombination dieser Zersetzungsprodukte zu neuen Kontaminanten kommen, was durch das Quenchen verhindert wird.

d. Absaugen der Zersetzungsprodukte zusammen mit Partikeln des Kontaminanten und Immobilisierung in einer Filteranordnung. Dabei handelt es sich nur um wenige Partikel, trotz der optimierten Temperaturführung, die ein Abspringen von Partikeln weitestgehend vermeidet, entstanden sind. Tatsächlich fällt nach der Erfindung im Vergleich zum Stand der Technik nur ca. 5 % an entsorgungspflichtigem bzw. kontaminiertem Abfall an, einschließlich des Filters.

Nach der Erfindung sind die weiteren, gleichzeitig ablaufenden Verfahrensschritte vorgesehen:
e. Abscheiden infolge der Erwärmung abgesprengter Partikel der Beschichtung vor der Immobilisierung in der Filteranordnung. Dadurch wird der Filter nicht so schnell zugesetzt und zusätzlich die Abfallmenge reduziert.
f. Die fortgesetzte Erwärmung der vom Kontaminanten befreiten Oberfläche des Bauteils wird so vorgenommen, dass der in das Material, die oberflächennahe Struktur des Bauteils eingedrungene Kontaminant, beispielsweise PCB, aus der oberflächennahen Struktur des Bauteils, aus dem Basismaterial, aus einer Behandlungstiefe von 4 bis 10 mm herausgedrängt wird.
g. Herausdrängen des Kontaminanten aus der oberflächennahen Struktur, vorzugweise bis aus einer bevorzugten Behandlungstiefe von 6 mm. Dies geschieht, indem die Struktur so weit erwärmt wird, dass eingeschlossene Gase, insbesondere CO und CO₂, sowie Kristallwasser bei ihrer Ausdehnung den Kontaminanten zur Bauteiloberfläche führen. Dort wird er durch die vorherrschende Reaktionstemperatur zersetzt und die Zersetzungsprodukte drängen im gasförmigen Zustand aus der oberflächennahen Struktur hinaus.

Die Reaktionstemperatur in der Beschichtung beträgt zwischen 1000 °C und 1500 °C, vorzugsweise zwischen 1000 °C und 1200 °C, besonders bevorzugt zwischen 1000 °C und 1100 °C. Demgegenüber beträgt die Temperatur auf der von der Beschichtung befreiten Bauteiloberfläche zwischen 90 und 120 °C, vorzugsweise 100 °C, jedenfalls unter 1100 °C bei Beton, in der Behandlungstiefe von 4 bis 10 mm, bevorzugt 6 mm. Es hat sich überraschend gezeigt, dass nur - im Vergleich zur Behandlung der Beschichtung - niedrige Temperaturen eine Dekontamination der oberflächennahen Struktur erreichen können.

Sobald die Temperatur höhere Temperaturen erreicht, insbesondere über 1100 °C, dann machen Veränderungen im Gefüge des Bauteils, beispielsweise im Beton, die Lösung der Aufgabe der Erfindung unmöglich. Bei Beton mit silikatischer Zuschlagkörnung verglast die Oberfläche und ein Austritt des Kontaminanten wird verhindert, er wird eingeschlossen im Beton. Im Falle von Beton mit karbonatischer (kalzitischer) Zuschlagkörnung platzen Teile ab, die dann im Filter oder in der Abscheidung verbleiben. Diese Teile werden nicht dekontaminiert und stellen eine große Menge kontaminierten Abfall dar, der dann verbrannt oder deponiert werden muss.

Es ist nach einer vorteilhaften Ausgestaltung des Verfahrens vorgesehen, dass die bei der thermischen Zersetzung gebildeten gasförmigen chemischen Komponenten thermisch auf Temperaturen von weniger als unter 300 °C, vorzugsweise zwischen 200 und 300 °C, gequencht, d. h. schnell abgekühlt, werden. Alternativ oder zusätzlich kann die vorbestimmte Temperatur mindestens 1000 °C betragen. Durch eine derartig hohe Temperatur mit anschließender schneller Abkühlung wird die Bildung von polychlorierten Dibenzodioxinen (PCDD) und polychlorierten Dibenzofuranen (PCDF) durch eine Rekombination von Zersetzungsprodukten unterbunden. Vorzugsweise erfolgt die Kühlung durch Zumischen von Umgebungsluft.

Es hat sich als vorteilhaft erwiesen, wenn die Immobilisierung, insbesondere von Partikeln und Gasen, in einer Filteranordnung erfolgt. Diese umfasst einen ersten Filter, ausgebildet als FFP9-Filter, und einen zweiten Filter, ausgebildet als Kombi-Filter, vorzugsweise FFP13-Filter, in dem auch gasförmige Kontaminanten gebunden werden. Vor der Filteranordnung werden große Partikel in einem Partikelabscheider ausgeschleust.

Vorzugsweise besteht zumindest die oberflächennahe Struktur des Bauteils aus einem mineralischen Werkstoff. Besonders bevorzugt ist der mineralische Werkstoff Beton, bei dem eingeschlossene Gase, insbesondere Kohlenmonoxid (CO) und Kohlendioxid (CO₂), sowie Kristallwasser bei ihrer Ausdehnung den Kontaminanten zur Oberfläche und aus dieser hinaus treiben.

Das Verfahren ist insbesondere vorgesehen, um den Kontaminanten PCB (Polychlorierte Biphenyle) zu behandeln.

Die Aufgabe wird weiterhin gelöst durch eine Vorrichtung zur Ausführung eines Verfahrens wie zuvor beschrieben bzw. nach einem der Ansprüche 1 bis 11, wobei die Vorrichtung einen Laser umfasst, der ausgebildet ist, durch einen Laserstrahl auf die Oberfläche des Bauteils thermisch einzuwirken. Die Vorrichtung umfasst weiterhin eine Analyseanordnung zur Überwachung der thermischen Zersetzung eines Kontaminanten. Außerdem sind folgende weitere Komponenten vorhanden:
a. eine Abscheideeinrichtung zumindest für abgesprengte Partikel einer Beschichtung, die durch den Kontaminanten gebildet wird, vorzugsweise auch von gasförmigen Kontaminanten;
b. eine Kühlungsanordnung für Zersetzungsprodukte des Kontaminanten, sodass eine Rekombination zum Kontaminanten verhindert wird;
c. eine Absaugeinrichtung für die gasförmigen Zersetzungsprodukte und insbesondere schwebende Partikel des Kontaminanten;
d. eine Filteranordnung zur Immobilisierung von Partikeln und insbesondere gasförmigen Zersetzungsprodukten des Kontaminanten umfasst sind.

Nach der Erfindung wirkt der Laserstrahl durch eine offene, auf die Oberfläche des Bauteils aufsetzbare Seite eines im Übrigen geschlossenen Handgeräts auf die Oberfläche des Bauteils ein. Der Laserstrahl wird dabei wellenförmig, in einer wellenförmigen Laserspur über die zu bearbeitende kontaminierte Oberfläche bewegt. Im Innenraum des Handgeräts werden die Zersetzungsprodukte gebildet und von dort abgesaugt.

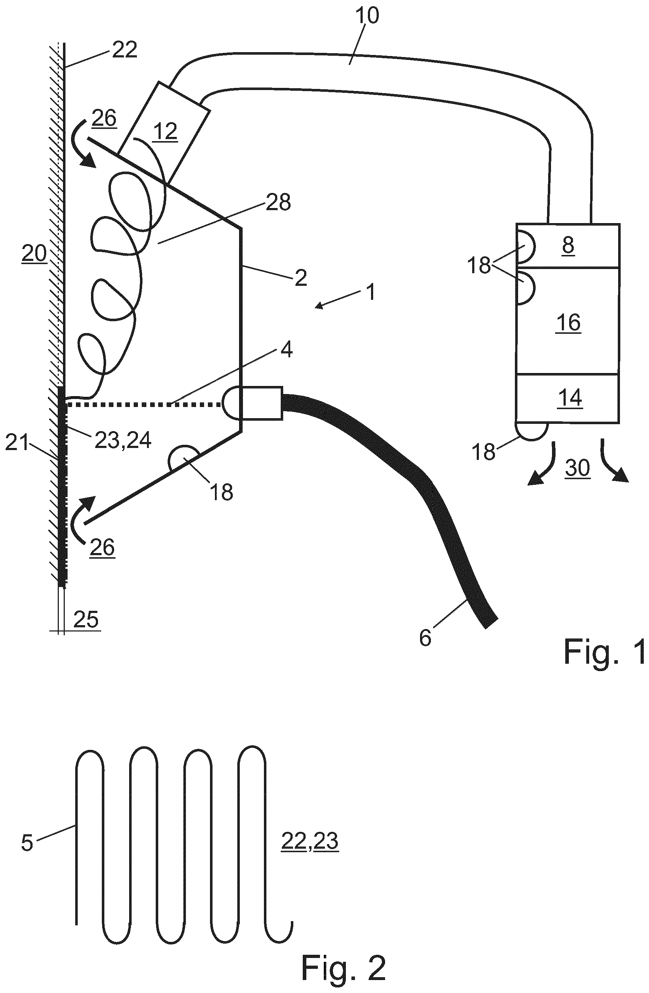

Anhand der Beschreibung von Ausführungsbeispielen und ihrer Darstellung in den zugehörigen Zeichnungen wird die Erfindung nachfolgend näher erläutert. Fig. 1 zeigt schematisch eine geschnittene Seitenansicht einer Ausführungsform einer erfindungsgemäßen Vorrichtung zur thermischen Dekontamination, ausgeführt als Handgerät 1, das durch einen Bediener an der Oberfläche 22 des Bauteils 20 entlanggeführt wird.

Dazu weist das Handgerät 1 ein Gehäuse 2 auf, das einen Teil der Oberfläche 22 komplett abdeckt, zur Oberfläche 22 hin jedoch geöffnet ist. Durch diese Öffnung richtet sich ein Laserstrahl 4 auf die Oberfläche 22. Die Laserstrahlung wird über eine Zuleitung 6 aus einem nicht dargestellten Lasergerät zugeführt. Das Handgerät 1 wird durch einen Bediener langsam und Abschnitt für Abschnitt über die Oberfläche 22 bewegt, um die Dekontamination im Sinne der Erfindung vorzunehmen.

An der Stelle, wo der Laserstrahl 4 auf die Oberfläche 22 trifft, wird die Beschichtung 24, die aus PCB besteht, erhitzt, sodass bereits durch die auftretenden Spannungen in der Beschichtung 24 größere Partikel abspringen. Im Übrigen wird die an der Oberfläche 22 anhaftende Beschichtung 24 thermisch zersetzt, sodass sich insbesondere gasförmige Zersetzungsprodukte 28 in dem Innenraum des Gehäuses 2 ausbreiten und durch eine Absaugleitung 10 aus dem Innenraum abgesaugt werden. Während des Zersetzungsvorgangs werden die Zersetzungsprodukte 28 durch eine Analyseanordnung 18 analysiert und damit der ordnungsgemäße Ablauf des Prozesses überwacht. Weitere Analyseanordnungen 18 sind in der Abscheideanordnung 8, der Filteranordnung 16 und zur Analyse der Abluft 30 an einem geeigneten Ort, wo die Abluft 30 vorliegt, vorgesehen.

Auch nach dem Entfernen der Beschichtung 24 wird die Oberfläche 22 weiter erhitzt, sodass in die Oberfläche eingedrungenes PCB, die Tiefenkontamination 21, herausgetrieben, ebenfalls zersetzt und gleichermaßen behandelt werden, wie die zersetzte Beschichtung 24. Die Erhitzung wird dabei aber auf solche Temperaturen begrenzt, die die oberflächennahe Struktur 25 nicht nachteilig beeinflusst, z. B. Partikel absprengt oder die Oberfläche verglast und verschließt. Damit wird nicht nur die beschichtete Oberfläche von Kontaminanten befreit, sondern auch das in einer oberflächennahen Struktur 25 bzw. Schicht kontaminierte Bauteil selbst behandelt und dekontaminiert.

Durch die Absaugleitung 10 mit einer Kühlungsanordnung 12 am Eintritt treten die Zersetzungsprodukte, sowohl die zersetzte Oberfläche 24 als auch das aus dem Bauteil 20 bzw. dessen oberflächennahe Struktur 25 ausgetriebene PCB als Tiefenkontamination 21, zunächst in die Abscheideanordnung 8 ein, wo ein schnelles Abkühlen eine Rekombination zur neuen Kontaminanten verhindert. Partikel und Abgase werden danach in einer Filteranordnung 16 gebunden, um sie einer geordneten Entsorgung zuführen zu können. Die Strömung durch die Absaugleitung 10 wird durch eine Absaugeinrichtung 14 initiiert, wodurch Zuluft 26 in den Innenraum des Gehäuses 2 eintritt (und zugleich ein unerwünschtes Austreten von Zersetzungsprodukten 28 verhindert wird) und Abluft 30 aus der Absaugeinrichtung 14 austritt. Die Zuluft 26 dient gleichzeitig zur Kühlung der Zersetzungsprodukte, so wie auch die Kühlungsanordnung 12.

Fig. 2 zeigt die bevorzugte Bahn des Laserstrahls 4, wie dieser in einer Laserspur 5 über die Oberfläche 22, 23 geführt wird. Dabei wird durch eine Steuerung bzw. Regelung vom Geschwindigkeit und Intensität des Laserstrahls 4 die jeweils angestrebte Temperatur eingestellt und durch eine bekannte Einrichtung (z. B. IR-Messung) geprüft. Bei der Beschichtungsoberfläche 23 der Beschichtung 24 werden dabei 1000 bis 1500 °C eingestellt, bei der Bauteiloberfläche 22, die bereits von der Beschichtung 24 befreit ist, und 100 °C bei der oberflächennahen Struktur 25.

### Bezugszeichenliste

- 1: Handgerät
- 2: Gehäuse
- 4: Laserstrahl
- 5: Laserspur
- 6: Zuleitung Laser
- 8: Abscheideanordnung
- 10: Absaugleitung
- 12: Kühlungsanordnung
- 14: Absaugeinrichtung
- 16: Filteranordnung
- 18: Analyseanordnung
- 20: Bauteil
- 21: Tiefenkontamination
- 22: Oberfläche, Bauteiloberfläche
- 23: Oberfläche, Beschichtungsoberfläche
- 24: Beschichtung
- 25: oberflächennahe Struktur
- 26: Zuluft
- 28: Zersetzungsprodukte
- 30: Abluft

## Patentansprüche

1. Verfahren zur Dekontamination eines Bauteils (20), wobei eine Erwärmung einer Oberfläche (22, 23) des Bauteils (20) durch einen Laserstrahl (4) erfolgt, wobei eine auf einer Bauteiloberfläche (22) des Bauteils (20) anhaftende Beschichtung (24), die durch einen Kontaminanten gebildet wird, thermisch zersetzt wird, wobei eine Überwachung der Zersetzung des Kontaminanten durch Analyse der gasförmigen Zersetzungsprodukte (28) im Bereich über der Oberfläche (22, 23) mittels einer Analyseanordnung (18) erfolgt, wobei eine Verhinderung der Rekombination der Zersetzungsprodukte zum Kontaminanten durch Kühlung der Zersetzungsprodukte mittels einer Kühlungsanordnung (12) erreicht wird, wobei ein Absaugen der Zersetzungsprodukte (28) zusammen mit Partikeln des Kontaminanten und eine Immobilisierung in einer Filteranordnung (16) erfolgen, **dadurch gekennzeichnet, dass** infolge der Erwärmung abgesprengte Partikel der Beschichtung (24) mittels einer Abscheideanordnung (8) abgeschieden werden, bevor sie in der Filteranordnung (16) immobilisiert werden, wobei die Erwärmung der vom Kontaminanten befreiten Bauteiloberfläche (22) des Bauteils (20) fortgesetzt wird, wobei der Kontaminant aus einer oberflächennahen Struktur (25) des Bauteils (20) aus einer Behandlungstiefe von 4 bis 10 mm herausgedrängt wird, indem die oberflächennahe Struktur (25) so weit erwärmt wird, dass in der oberflächennahen Struktur (25) eingeschlossene Gase sowie Kristallwasser bei ihrer Ausdehnung den Kontaminanten zur Bauteiloberfläche (22) führen, dieser dort bei der vorherrschenden Reaktionstemperatur zu Zersetzungsprodukten (28) zersetzt wird, und wobei die Zersetzungsprodukte (28) im gasförmigen Zustand aus der oberflächennahen Struktur (25) hinaus drängen.

2. Verfahren nach Anspruch 1, wobei die Reaktionstemperatur in der Beschichtung (24) zwischen 1000 °C und 1500 °C beträgt.

3. Verfahren nach Anspruch 1 oder 2, wobei die Temperatur auf der von der Beschichtung (24) befreiten Bauteiloberfläche (23) zwischen 90 und 120 °C in der Behandlungstiefe beträgt.

4. Verfahren nach einem der Ansprüche 1 bis 3, wobei der Laserstrahl (4) punktförmig über die Bauteiloberfläche (22) bewegt wird und die Temperatur über eine Geschwindigkeit und eine Intensität des Laserstrahls (4) gesteuert wird.

5. Verfahren nach Anspruch 4, wobei die Bewegung des Laserstrahls (4) wellenförmig einen zu bearbeitenden Bereich der Bauteiloberfläche (22) überstreicht.

6. Verfahren nach einem der Ansprüche 1 bis 5, wobei die Zersetzungsprodukte (28) auf eine Temperatur unter 300 °C gekühlt werden.

7. Verfahren nach Anspruch 6, wobei die Kühlung durch Zumischen von Umgebungsluft erfolgt.

8. Verfahren nach einem der Ansprüche 1 bis 7, wobei die Immobilisierung in einer Filteranordnung (16) erfolgt, die einen ersten Filter, ausgebildet als FFP9-Filter, und einen zweiten Filter, ausgebildet als FFP13-Filter, umfasst.

9. Verfahren nach einem der Ansprüche 1 bis 8, wobei zumindest die oberflächennahe Struktur (25) des Bauteils (20) aus einem mineralischen Werkstoff besteht.

10. Verfahren nach Anspruch 9, wobei der mineralische Werkstoff Beton ist.

11. Verfahren nach einem der Ansprüche 1 bis 10, wobei der Kontaminant PCB ist.

12. Vorrichtung zur Ausführung eines Verfahrens nach einem der Ansprüche 1 bis 11, wobei die Vorrichtung einen Laser umfasst, der ausgebildet ist, durch einen Laserstrahl (4) auf die Oberfläche (22, 23) des Bauteils (20) thermisch einzuwirken, wobei die Vorrichtung weiterhin eine Analyseanordnung (18) zur Überwachung der thermischen Zersetzung eines Kontaminanten umfasst, wobei außerdem
a. eine Abscheideeinrichtung (8) zumindest für abgesprengte Partikel einer Beschichtung (24), die durch den Kontaminanten gebildet wird,
b. eine Kühlungsanordnung (12) für Zersetzungsprodukte (28) des Kontaminanten;
c. eine Absaugeinrichtung (14) für die gasförmigen Zersetzungsprodukte (28) und Partikel des Kontaminanten;
d. eine Filteranordnung (16) zur Immobilisierung von Partikeln und Zersetzungsprodukten (28) des Kontaminanten sowie ein vorgelagertes Abscheiden abgesprengter Partikel der Beschichtung mittels einer Abscheideanordnung (8)
umfasst sind, **dadurch gekennzeichnet, dass** der Laserstrahl (4) durch eine offene, auf die Oberfläche (22, 23) des Bauteils (20) aufsetzbare Seite eines im Übrigen geschlossenen Handgeräts (1) auf die Oberfläche (22, 23) des Bauteils (20) einwirkt, wobei der Laserstrahl (4) in einer wellenförmigen Laserspur (5) über die zu bearbeitende Oberfläche (22, 23) bewegt wird, wobei im Innenraum des Handgeräts (1) die Zersetzungsprodukte (28) gebildet und von dort abgesaugt werden.
